# EUROPEAN PATENT APPLICATION

(11) **EP 2 261 794 A1**
(43) Date of publication of application: **15.12.2010**
(21) Application number: 10164727.9
(22) Date of filing: 02.06.2010
(51) Int. Cl.: G06F 3/147, G09G 3/00

(54) **Portable image projector and projection method**

(30) Priority: 05.06.2009 GB 0909758
(71) Applicant: T-Data Systems (S) Pte Ltd, Singapore 456458 (SG)
(72) Inventor: Tan, Joon Yong Wayne, 456458, Singapore (SG)
(74) Representative: Vossius & Partner

(57) **Abstract**

A portable image projector is disclosed that has a communications module configured to communicate with a host computer to receive image data for at least one image from the host computer, the image being or having been displayed on a monitor of the host computer; a processor operatively connected to the communication module configured to receive and process the image data and to output the processed image data; and an image projection module operatively connected to the processor and configured to receive the processed image data and to project the processes image data as the at least one image using an image projector. A corresponding method is also disclosed.

## Description

### Technical Field

This invention relates to a portable image projector and projection; and relates more specifically, but not exclusively, to a portable image projector and projection for use with a host computer.

### Definition

Throughout this specification a reference to a computer is to be taken as including a reference to a desktop computer, personal computer, laptop computer, notebook computer, tablet computer, personal digital assistant, and other similar products.

### Background

Computers use monitors or screens for display purposes. This limits the number of persons who can view the display to the number who can crowd around the monitor. This is normally a relatively small number of persons. This is especially so for small, potable computers such as PDAs where the monitor is quite small and it is often difficult to accurately see the detail, particularly for small text.

Projectors are often used with computers for projecting a display onto a screen. But projectors are bulky, expensive and require some set-up time. They are more suited to larger groups of people. A simple and easily-used apparatus for projection is required.

### Summary

According to an exemplary aspect there is provided a portable image projector including a communications module configured to communicate with a host computer to receive image data for at least one image from the host computer, the image being or having been displayed on a monitor of the host computer. A processor is operatively connected to the communication module configured to receive and process the image data and to output the processed image data. An image projection module is operatively connected to the processor and configured to receive the processed image data and to project the processed image data as the at least one image using an image projector.

The image projection module may comprise optical lances. The communication module may comprises at least one of: a USB connector and USB controller, and a wireless module. The portable image projector may further comprise a battery module operatively connected to the processor and configured to supply electrical power to the portable image projector to enable the portable image projector to be able to operate independently of the host computer for electrical power. The portable image projector may further comprise a RAM module operatively connected to the processor and configured to buffer the image data. The portable image projector may further comprise a memory module operatively connected to the processor and configured to store the image data, the memory module comprising non-volatile memory; the memory module being configured such that when the image data is stored in the memory module, the images are able to be subsequently projected without again being downloaded from host computer and independently of the host computer. The portable image projector may further comprise a ROM module operatively connected to the processor for storing operating applications. The portable image projector may be auto-run and the operating applications comprise a driver for installation in the host computer. The portable image projector may further comprise an outer casing enclosing the communication module, the processor, the image projection module, the image projector, the battery module, the RAM module, the memory module, and the ROM module; the outer casing forming a unity structure for the portable image projector.

According to another exemplary aspect there is provided a method for projecting an image displayed on a monitor of a host computer using a portable image projector as described above. The method comprises the host computer automatically downloading to a communications module of the portable image projector all image data for all images when and as they are displayed on the monitor of the host computer so the images can be projected by an image projection module of the portable image projector onto a surface.

When the portable image projector is first operatively connected to the host computer, during a handshake procedure the portable image projector may query if the necessary driver is installed in the host computer and, if not, the driver is uploaded from the ROM module of the portable image projector to the host computer by the processor of the portable image projector. All the image data of all the images may be saved into a memory module by the processor. The image projection module may comprise optical lances. The communication module may comprise at least one of: a USB connector and USB controller, and a wireless module. A battery module may be operatively connected to the processor and may be used to supply electrical power to the portable image projector to be able the portable image projector to operate independently of the host computer for electrical power. The RAM module may be used to buffer the image data. When the image data is stored in the memory module, the images may subsequently be projected without again being downloaded from host computer and independently of the host computer

### Brief Description of the Drawings

In order that the invention may be fully understood and readily put into practical effect, there shall now be described exemplary embodiments by way of non-limitative example; the description being with reference to the accompanying illustrative drawings.

In the drawings:
Figure 1 is a schematic illustration of an exemplary portable image projector in use with a host computer;
Figure 2 is a perspective view of the portable image projector of Figure 1;
Figure 3 is a black diagram showing the principal components of the portable image projector of Figures 1 and 2; and
Figure 4 is a flow chart for the operation of the portable image projector of Figures 1 to 3.

### Detailed Description of the Preferred Embodiments

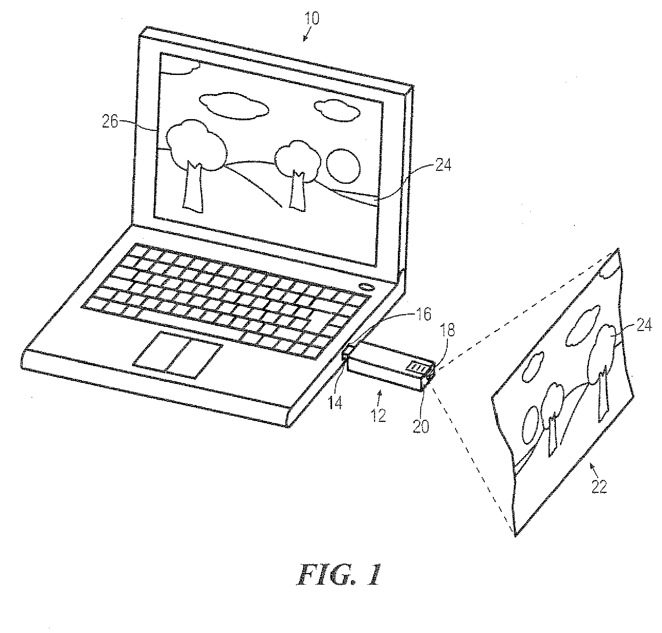

To refer to Figure 1, there is shown a host computer 10 - in this case a notebook computer - having a portable image projector 12 operatively connected with the host computer 10. As shown, the operative connection is by a USB connector 14 of the portable image projector 12 directly engaging in a USB port 16 of the host computer. However, the operative connection may be an indirect USB connection such as by using a cable; or may be a wireless connection such as by use of Bluetooth or WiFi.

The portable image projector 12 has an image projector 18 in an end surface 20 of the portable image projector 12 for projecting onto a surface 22 an image 24 that is also on the monitor 26 of the host computer 10. The portable image projector 12 has an outer casing 27 of which the end surface 20 forms a part. The outer casing 27 forms a unitary structure for the portable image projector 12. The image projector 18 may be located in one or more of any suitable surface or surfaces of the outer casing 27.

The image projector 18 may be, for example, optical lances that may be of any suitable, known form. It may include zoom and focus functionality in accordance with known technologies. These may be controlled by a processor 30. The image 24 may be of any suitable format including (but not limited to) pdf, jpeg, video, PowerPoint, images, and so forth.

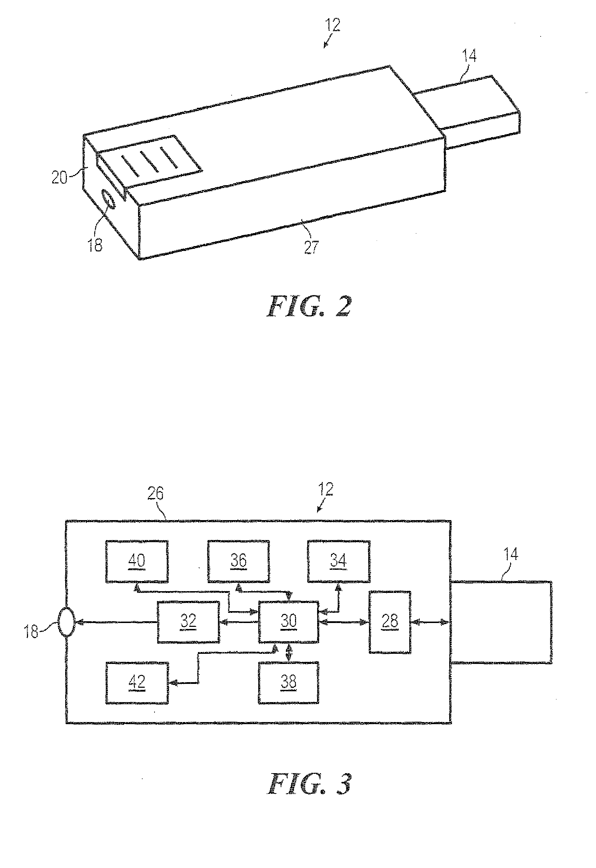

As shown in Figure 3, the USB connector 14 of the portable image projector 12 is operatively connected to a USB controller 28 that in turn is operatively connected to the processor 30.

The processor 30 in turn is operatively connected to an image projection module 32 for controlling, and supplying images to, the optical lances 18.

Also operatively connected to the processor 30 are a ROM module 34, a RAM module 36 and a memory module 38. There optionally may also be a wireless module 40 for wireless connectivity to the host computer 10. There may also be a battery module 42 for supplying power to the portable image projector 12 to enable the portable image projector 12 to operate independently of the host computer 10 for electrical power supply. The battery 42 may be operatively connected to the processor 30. It may be a rechargeable battery capable of being recharged when the portable image projector 12 is connected to the host computer 10 by the USB connector 14 and thus is able to draw electrical power from the host computer 10. The battery 42 may be insertable and removable via a removable battery cover 42 in the casing 26.

The ROM module 34 will contain all the necessary applications for the operation of the portable image projector; and auto-run drive software so that when the portable image projector 12 is first operatively connected to the host 10, the auto-run drive software will be uploaded by the processor 30 to the host computer 10. This will be to the operating system of the host computer 10 and will include the necessary driver. This will be following an initial (and known) handshake and interrogation procedure.

In this way the data for the image 24 is not only sent to the monitor 26 but is also simultaneously sent to the portable image projector 12. Upon being received by the portable image projector 12 over the USB connector 14 or the wireless module 40, the processor 30 processes the data and sends it to the image projection module 32 where it is further processed and sent to the optical lances 18 for projection. Given normal processing speeds this is, effectively, simultaneous due to the limitations of human vision.

If required or desired, the data for the image 24 may be stored in the memory module 38 to enable it subsequently to be projected without again being downloaded from host computer 10. The battery module 42 would supply the power for such a use. This may be at any suitable time and/or location and the projection will be totally independent of the host computer 10. The processor 30 would control such use with the data for the image 24 being simply downloaded from the memory module 38 by the processor 30 and being projected.

The RAM 36 may be used as a buffer in the event the image data is in excess of the processing capability of the processor 30 and/or the image projection module 32 and/or the memory module 38.

The memory module 38 may be of any suitable non-volatile form including disk and/or Flash memory.

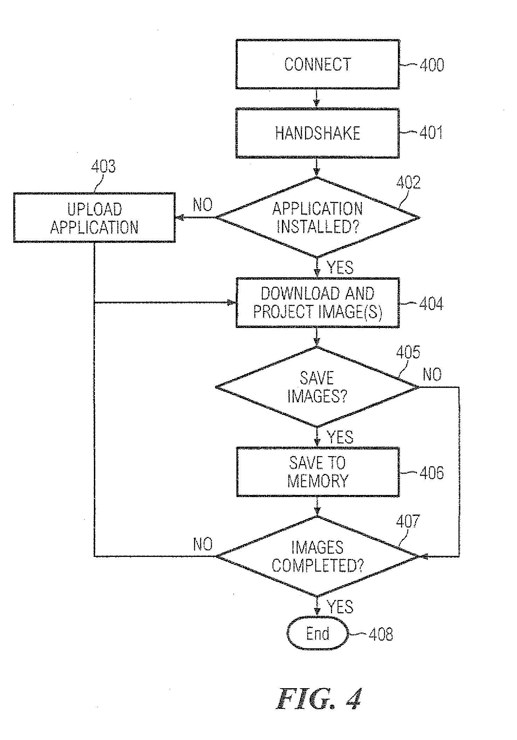

To now refer to Figure 4, when the portable image projector 12 is first operatively connected to the host computer 10 (400), during the handshake procedure (481) the portable image projector queries if the necessary driver is installed in the host computer 10 (402). If not, the driver is uploaded from the ROM module 34 to the host computer 10 (403). If yes, at (402) the driver is already installed on the host computer 10.

The host computer 10 then automatically downloads (404) to the portable image projector 12 all image data of all images 24 when and as they are displayed on monitor 26 so they can be projected by optical lances 18 onto the surface 22.

There may be a screen prompt (405) enquiring if the image data is to be saved into memory module 38. If it is to be saved, it is automatically saved into memory module 38 (406) by process 30 as it processes the image data. When saved, or if it is not to be saved, a query is raised if the image display by the portable image projector 12 is completed (407) and there is no more image data to be received by the portable image projector 12. If no, the process reverts to (404). If yes, the process ends (408).

Whilst there has been described in the foregoing description exemplary embodiments, it will be understood by those skilled in the technology concerned that many variations in details of design, construction and/or operation may be made without departing from the present invention.

## Claims

1. A portable image projector comprising:
a communications module configured to communicate with a host computer to receive image data for at least one image from the host computer, the image being or having been displayed on a monitor of the host computer;
a processor operatively connected to the communication module configured to receive and process the image data and to output the processed image data;
an image projection module operatively connected to the processor and configured to receive the processed image data and to project the processed image data as the at least one image using an image projector.

2. A portable image projector as claimed in claim 1, wherein the image projection module comprises optical lances.

3. A portable image projector as claimed in claim 1 or claim 2, wherein the communication module comprises at least one selected from the group consisting of: a USB connector and USB controller, and a wireless module.

4. A portable image projector as claimed in any one of claims 1 to 3 further comprising a battery module operatively connected to the processor and configured to supply electrical power to the portable image projector to enable the portable image projector to be able to operate independently of the host computer for electrical power.

5. A portable image projector as claimed in any one of claims 1 to 4 further comprising a RAM module operatively connected to the processor and configured to buffer the image data.

6. A portable image projector as claimed in any one of claims 1 to 5 further comprising a memory module operatively connected to the processor and configured to store the image data, the memory module comprising non-volatile memory; the memory module being configured such that when the image data is stored in the memory module, the images are able to be subsequently projected without again being downloaded from host computer and independently of the host computer.

7. A portable image projector as claimed in any one of claims 1 to 6 further comprising a ROM module operatively connected to the processor for storing operating applications.

8. A portable image projector as claimed in claim 7, wherein the portable image projector is auto-run and the operating applications comprise a driver for installation in the host computer.

9. A portable image projector as claimed in claim 7 further comprising an outer casing enclosing the communication module, the processor, the image projection module, the image projector, the battery module, the RAM module, the memory module, and the ROM module; the outer casing forming a unity structure for the portable image projector.

10. A method for projecting an image displayed on a monitor of a host computer using a portable image projector as claims in any one of claim 1 to 9, the method comprising:
the host computer automatically downloading to a communications module of the potable image projector all image data for all images when and as they are displayed on the monitor of the host computer so the images can be projected by an image projection module of the portable image projector onto a surface.

11. A method for projecting an image as claimed in claim 10, wherein when the portable image projector is first operatively connected to the host computer, during a handshake procedure the portable image projector queries if the necessary driver is installed in the host computer and, if not, the driver is uploaded from the ROM module of the portable image projector to the host computer by the processor of the portable image projector.

12. A method for projecting an image as claimed in claim 10 or claim 11, wherein all the image data of all the images is saved into a memory module by the processor.

13. A method for projecting an image as claimed in any one of claims 10 to claim 12, wherein the image projection module comprises optical lances.

14. A method for projecting an image as claimed in any one of claims 10 to 13, wherein the communication module comprises at least one selected from the group consisting of: a USB connector and USB controller, and a wireless module.

15. A method for projecting an image as claimed in any one of claims 1 to 14, wherein a battery module operatively connected to the processor is used to supply electrical power to the portable image projector to be able the portable image projector to operate independently of the host computer for electrical power.
